# EUROPEAN PATENT SPECIFICATION

(11) **EP 3 442 179 B1**
(45) Date of publication and mention of the grant of the patent: **09.12.2020**
(21) Application number: 17882187.2
(22) Date of filing: 27.11.2017
(51) Int. Cl.: H04L 12/761, H04L 12/721, H04L 12/751, H04L 12/717, H04L 12/753, H04L 12/741, H04L 12/715

(54) **METHOD AND DEVICE FOR TRANSMITTING BIT INDEXED EXPLICIT REPLICATION INFORMATION**
VERFAHREN UND VORRICHTUNG ZUR ÜBERTRAGUNG VON BITINDIZIERTEN EXPLIZITEN REPLIKATIONSINFORMATIONEN
PROCÉDÉ ET DISPOSITIF DE TRANSMISSION D'INFORMATIONS DE RÉPLICATION EXPLICITE INDEXÉES PAR BITS

(30) Priority: 15.12.2016 CN 201611159290
(43) Date of publication of application: 13.02.2019
(73) Proprietor: ZTE Corporation, Shenzhen, Guangdong 518057 (CN)
(72) Inventor: ZHANG, Zheng, Shenzhen Guangdong 518057 (CN); WEI, Yuehua, Shenzhen Guangdong 518057 (CN); XIAO, Min, Shenzhen Guangdong 518057 (CN); WANG, Cui, Shenzhen Guangdong 518057 (CN)
(74) Representative: Regimbeau
(86) International application number: PCT/CN2017/113150
(87) International publication number: WO 2018/107955

(56) References cited:
- WO-A1-2016/188502
- CN-A- 105 871 565
- CN-A- 105 933 228
- US-A1- 2015 078 378
- US-A1- 2016 191 372
- US-A1- 2016 254 987

## Description

### TECHNICAL FIELD

The present disclosure relates to, but is not limited to, the field of communications and, in particular, relates to a method and device for transmitting bit indexed explicit replication information.

### BACKGROUND

A multicast technology plays an increasingly more important role in the current Internet. For example, the multicast technology is used in an Interactive Personality TV, IPTV, a Net-Meeting, a games live broadcast, etc.

At present, the following protocols are used in the existing multicast technology: the Protocol Independent Multicast, PIM, the Internet Control Message Protocol, IGMP, and the Multicast Listener Discovery Protocol, MLD. In early small-scale application scenarios, the existing protocols can meet users' requirements. However, as the multicast technology is applied in a wider range and networking forms become increasingly more complex, in the case that the multicast technology is directly applied to the Internet, due to excessive multicast statuses in a backbone network, signaling and a large amount of control resources which occupy intermediate nodes interact with each other, and the development of the widely applied virtual private network, VPN, technology cannot be well supported. Therefore, the current development direction tends to transmit multicast traffic with other technologies rather than run traditional multicast protocols in the backbone network. Other technologies include a Multicast Label Distribution Protocol, MLDP, technology, a Point-to-Multipoint Traffic Engineering, P2MP TE, technology, a Bit Indexed Explicit Replication, BIER, technology and Bit Indexed Explicit Replication Traffic Engineering, BIER TE, technology.

The BIER TE technology is an advanced BIER technology. In the BIER TE technology, traffic is transmitted in a predetermined link until the traffic reaches a destination node. The BIER TE technology is characterized by allocating different bits for links supporting the BIER forwarding technology. When multicast traffic is encapsulated, a bit string is also encapsulated in the BIER message header, but each bit of the bit string in the BIER message header is used for identifying a specific link rather than an edge destination node. Similarly, when the message is forwarded in a BIER network, a node processes the message in a manner different from the traditional BIER manner. Firstly, the BIER TE forwarding table to be queried is similar in form to the BIER forwarding table; secondly, when the message is forwarded according to the BIER TE forwarding table, the message is forwarded and processed according to bits of a link connected to the node to ensure that the message does not loop back and can reach the destination node correctly. Further relevant technologies are also known from document US2016/254987 A1 which relates to traffic engineering for bit indexed explicit replication, and document US2015/078378A1 which relates to bit indexed explicit replication using multiprotocol label switching.

### SUMMARY

The present invention is defined by the subject-matter of the independent claims. Advantageous embodiments are defined in the dependent claims. The following is a summary of the subject matter described in detail in the present application. This summary is not intended to limit the scope of the claims.

Here, it is expected that embodiments of the present invention provide a method, device and computer-readable storage medium storing computer-executable instructions for transmitting bit indexed explicit replication information to avoid that an SDN controller frequently change link BPs because of link changes and improve the efficiency and flexibility of transmitting link BPs.

The technical solution of the present invention is implemented as follows.

According to a first aspect, an embodiment of the present invention provides a method for transmitting bit indexed explicit replication information. The method includes: transmitting, by a bit indexed explicit replication traffic engineering, BIER TE, node in a BIER TE network, a range information of configurable link bit positions, BPs, of the BIER TE node, capable of forwarding network data traffic between the BIER TE node and neighboring nodes of the BIER TE node to another node in the BIER TE network, wherein the another node refers to any one BIER TE node other than the BIER TE node in the BIER TE network, and wherein the range information of the configurable link BPs is a bit position value range of the configurable link BPs; receiving, by the BIER TE node, range information of configurable link BPs of the another node; and adjusting, by the BIER TE node, the range information of the configurable link BPs of the BIER TE node according to a preset adjustment rule, in a case where the range information of the configurable link BPs of the BIER TE node overlaps with the range information of the configurable link BPs of the another node.

In another embodiment of the present invention, the link indicated by the configurable link BPs comprises at least one of a physical link and a virtual link.

In another embodiment of the present invention, transmitting, by the BIER TE node, at least one of the following node information: a node priority, node BP information, a subdomain identifier, ID, a set identifier, SI, and a topology ID, while the BIER TE node transmits the range information of the configurable link BPs of the BIER TE node.

In another embodiment of the present invention, before the range information of the configurable link BPs of the BIER TE node is transmitted the method further includes: directly configuring the range information of the configurable link BPs on the BIER TE node, or receiving the range information of the configurable link BPs sent by a controller.

In another embodiment of the present invention, the transmitting, by the BIER TE node in the BIER TE network, the range information of the configurable link, BPs, capable of forwarding network data traffic between the BIER TE node and the neighboring nodes of the BIER TE node to the another node in the BIER TE network, comprises: transmitting, by the BIER TE node, the range information of the configurable link BPs of the BIER TE node through an extended protocol, wherein the protocol comprises at least one of the following protocols: an Open Shortest Path First, OSPF, protocol, an Intermediate System to Intermediate System, ISIS, protocol, a Border Gateway Protocol, BGP, and a Babel protocol.

In another embodiment of the present invention, the adjusting, by the BIER TE node, the range information of the configurable link BPs of the BIER TE node according to the preset adjustment rule, in a case where the range information of configurable link BPs of the BIER TE node overlaps with the range information of the configurable link BPs of the another node, comprises: determining a target node to be adjusted according to at least one of a node priority, a node BP information size and a bit forwarding route prefix of both the BIER TE node and the another node, in a case where the range information of configurable link BPs of the BIER TE node overlaps with the range information of the configurable link BPs of the another node, wherein the target node is one of the BIER TE node and the another node; and adjusting, by the BIER TE node, the range information of the configurable link BPs of the BIER TE node according to the preset adjustment rule when the target node is the BIER TE node.

According to a second aspect, an embodiment of the present invention provide a device for transmitting bit indexed explicit replication information, which is applicable to a node in a bit indexed explicit replication information traffic engineering BIER TE network. The device includes: a transmission module, configured to transmit a range information of configurable link bit positions, BPs, of the BIER TE node, capable of forwarding network data traffic between the BIER TE node and neighboring nodes of the BIER TE node to another node, wherein the another node refers to any one BIER TE node other than the BIER TE node in the BIER TE network , wherein the range information of the configurable link BPs is a bit position value range of the configurable link BPs; a reception module, configured to receive range information of configurable link BPs of the another node; an adjustment module, configured to adjust the range information of the configurable link BPs of the BIER TE node according to a preset adjustment rule, in a case where the range information of the configurable link BPs of the BIER TE node overlaps with the range information of the configurable link BPs of the another node.

In another embodiment of the present invention, the transmission module is further configured to transmit at least one of the following node information: a node priority, node BP information, a subdomain identifier, ID, a set identifier, SI, and a topology ID.

In another embodiment of the present invention, the adjustment module is configured to adjust the range information of the link BPs of the node according to the preset adjustment rule in the following manner: determining a target node to be adjusted according to at least one of a node priority, a node BP information size and a bit forwarding route prefix of both the BIER TE node and the another node, in a case where the range information of the configurable link BPs of the BIER TE node overlaps with the range information of the configurable link BPs of the another node, wherein the target node is one of the BIER TE node and the another node; and adjusting the range information of the configurable link BPs of the BIER TE node according to the preset adjustment rule when the target node is the BIER TE node.

In the method and device for transmitting bit indexed explicit replication information according to the embodiments of the present invention, the node in the BIER TE network transmits the link BP range information of the node, where the link BP range information is a range of values of available link BPs capable of forwarding network data traffic. In this way, the transmission of the link BP range information of a node in the BIER TE network in the network so that an SDN controller no longer needs to frequently change and send link BPs when the states of links capable of forwarding network data traffic of a network node change, thereby improving the efficiency and flexibility of transmitting link BPs, avoiding the complex and inflexible management of the SDN controller, and achieving the link BP management with high efficiency and flexibility in the network.

Other aspects can be understood after the accompanying drawings and detailed description are read and understood.

### BRIEF DESCRIPTION OF DRAWINGS

FIG. 1 is a flowchart of a method for transmitting bit indexed explicit replication information according to an embodiment of the present invention;
FIG. 2 is a structural diagram of a network according to an embodiment of the present invention;
FIG. 3 is a structural diagram of a network according to an embodiment of the present invention;
FIG. 4 is a structural diagram of a network according to an embodiment of the present invention;
FIG. 5 is a structural diagram of a network according to an embodiment of the present invention;
FIG. 6 is schematic view 1 of a protocol extension format according to an embodiment of the present invention;
FIG. 7 is schematic view 2 of a protocol extension format according to an embodiment of the present invention;
FIG. 8 is schematic view 3 of a protocol extension format according to an embodiment of the present invention;
FIG. 9 is schematic view 4 of a protocol extension format according to an embodiment of the present invention;
FIG. 10 is a structural diagram of a device for transmitting bit indexed explicit replication information according to an embodiment of the present invention; and
FIG. 11 is a structural diagram of another device for transmitting bit indexed explicit replication information according to an embodiment of the present invention.

### DETAILED DESCRIPTION

In the BIER TE technology, each link has its own link bit position, BP, information, and a software defined network, SDN, controller may be used for allocating link BP information. In an actual network, in order to implement a certain type of service, a large number of links, maybe a few thousands of links, are involved. Different types of services may require tens or hundreds of thousands of links, and the links may change dynamically according to the actual situation of the network. In this way, because the link BP allocation of each link is completely implemented by the SDN controller, any change of the links may cause the reconfiguration of link BPs by the SDN controller and the changes of link BPs, which inevitably greatly decreases the efficiency and flexibility of transmitting link BPs.

In the embodiments of the present invention, a node in a BIER network transmits link bit position, BP, range information of the node, where the link BP range information is a value range of available link BPs capable of forwarding BIER network data traffic, and the node receives link BP range information of another node.

The implementation of the technical solution will be further described in detail with reference to the accompanying drawings.

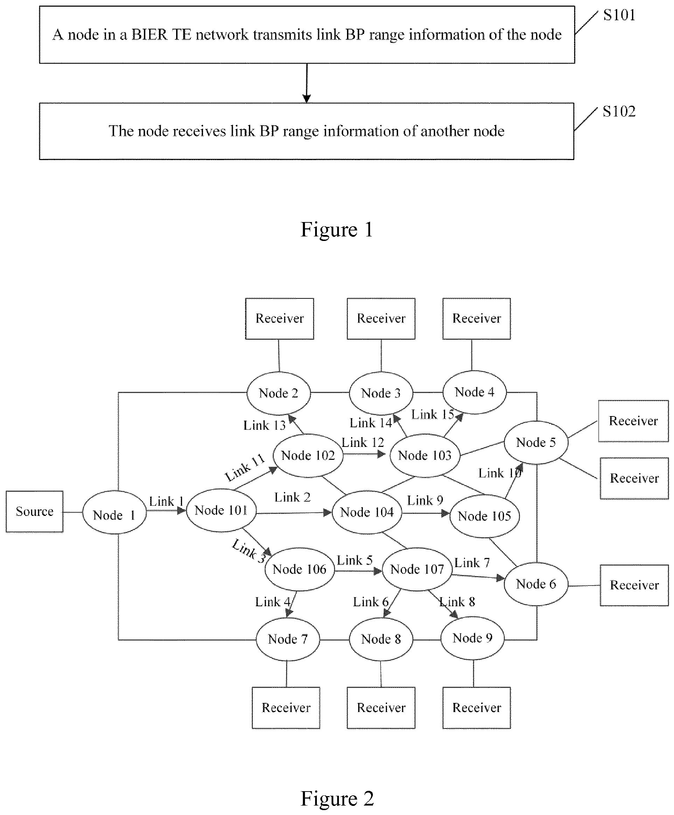

Embodiments of the present invention provide a method for transmitting bit indexed explicit replication information. As shown in FIG. 1, the method includes the steps described below.

In S101, a node in a BIER TE network transmits link BP range information of the node, where the link BP range information is a value range of configurable link BPs for forwarding network data traffic.

The node in the BIER TE network transmits the range information of configurable link BPs capable of forwarding network data traffic between the node itself and its neighboring nodes to another node. Here, the another node may be any one node other than the node itself in the BIER TE network to which the node belongs. The number of interfaces of each node in the BIER TE network is estimable. The interfaces include a virtual interface and a physical interface. Therefore, the node may estimate its own link BP range information. For example, if a node 1 estimates that the number of its own links is within 10, the link BP range of the node 1 may be 1-10, or 201-210; a node 2 estimates that the number of its own links is within 10, the link BP range of the node 2 may be 11-20.

The link may be a physical link or a virtual link. Optionally, nodes at two ends of a link are respectively referred to a first node and a second node, and the second node may be a neighboring node of the first node or a non-neighboring node of the first node. When the second node is a neighboring node of the first node, the link is a physical link. When the second node is a non-neighboring node of the first node, the link is a virtual link. The virtual link includes multiple physical paths connected by multiple nodes between the first node and the second node. In embodiments of the present invention, a specific form of the link is not limited to adapt to various network structures.

In embodiments of the present invention, while the node transmits the link BP range information of the node, the method further includes: transmitting, by the node, at least one of the following node information: a node priority, node BP information, a subdomain ID, subdomain-id, a set identifier, SI, and a topology ID. Here, while the link BP range information of the node is transmitted, the node information including the node priority, the node BP information, the subdomain ID, the set identifier, SI, and the topology ID is also transmitted. The node information may be transmitted through extended protocols.

Before the link BP range information of the node is transmitted, the method further includes: directly configuring the link BP range information on the node, or receiving the link BP range information sent by a controller. For a node, the link BP range information may be configured by the node itself, or may be configured by a controller. When the link BP range information of the node is configured by a controller, the controller transmits the configured link BP range information to the corresponding node.

The process of transmitting the link BP range information of the node by the node includes: transmitting, by the node, the link BP range information of the node through an extended protocol. The extended protocol includes at least one of the following protocols: an OSPF protocol, an ISIS protocol, a BGP protocol and a Bebel protocol. The link BP range information may be transmitted by added fields in a message of a protocol to achieve protocol extension. Here, a specific extension form of the protocol is not limited and how to use the specific protocol will not be repeated in detail.

In S102, the node receives link BP range information of another node.

Here, for a node, the node not only transmits its own link BP range information to other nodes but also receives the link BP range information of other nodes. For example, a node 1 transmits its own link BP range information to a node 2 and also receives the link BP range information of the node 2. Here, when the node 1 and the node 2 are neighboring nodes, the node 1 may directly receive the link BP range information of the node 2 via a physical path between the node 1 and the node 2. When the node 1 and the node 2 are non-neighboring nodes, the node 1 may obtain the link BP range information of the node 2 via paths between the node 1 and the node 2. For example, the link BP range information of the node 2 is transmitted to a node 3 and the node 3 transmits the link BP range information of the node 2 to the node 1, where the node 3 is a node neighboring to both the node 1 and the node 2.

In embodiments of the present invention, when the link BP range information of the node overlaps the link BP range information of another node, the link BP range information of the node is adjusted according to a preset adjustment rule. After the node in the network exchanges the node link BP range information with other nodes, if the link BP range information of the node overlaps the received link BP range information, a BIER TE message may be unable to be forwarded normally. At this time, a target node to be adjusted is determined according to the adjustment rule. When the target node is the node itself, the node adjusts its own link BP range information so that the link BP range information of the node does not overlap the link BP range information of other nodes.

The adjusting the link BP range information of the node according to the preset adjustment rule includes: determining the target node to be adjusted according to at least one of a node priority, a node BP information size and a bit forwarding route prefix of the node, and adjusting the link BP range information of the node when the target node is the node itself.

Here, when the link BP range information of the node 1 overlaps the link BP range information of the node 2, for example, when the link BP range information of the node 1 is 1-10 and the link BP range information of the node 2 is 5-10, whether the target node to be adjusted is the node 1 or the node 2 is determined. Optionally, the target node is determined according to at least one of the node priorities, node BP information sizes and bit forwarding route prefixes of the node 1 and the node 2. For example, when the node information includes the node priority, the node priorities of the node 1 and the node 2 are compared; if the node priority of the node 2 is higher, the node 1 is taken as the target node; if the node priorities of node 1 and the node 2 are identical, the target node may be determined according to the BP information sizes of the node 1 and the node 2 and the node with a larger node BP range information size is taken as the target node. Here, the target node may also be determined in conjunction with the bit forwarding route prefix of the node or by the bit forwarding route prefix of the node alone. The specific adjustment rule may be set according to actual needs and is not limited in the implementation of the present invention.

It is to be noted that each of the node 1 and the node 2 obtains its own link BP range information and the other's link BP range information through the interaction of the link BP range information, thereby determining that the link BP range information of the node 1 overlaps the link BP range information of the node 2. At this time, after the node 1 and the node 2 determine the target node according to the preset adjustment rule, if the target node is the node 1, the node 1 adjusts its own link BP range information. For example, in the case that the link BP range information of the node 1 is 1-10 and the link BP range information of the node 2 is 5-10, the node 1 adjusts its own link BP range information to be 1-4 and 105-110 and the node 1 notifies the adjusted link BP range information to other nodes including the node 2. If the target node is the node 2, the node 2 adjusts its own link BP range information. For example, in the case that the link BP range information of the node 1 is 1-10 and the link BP range information of the node 2 is 5-10, node 2 adjusts its own link BP range information to be 105-110 and the node 2 notifies the adjusted link BP range information to other nodes including node 1.

It is to be noted that in the embodiments of the present invention, for the same node, the order of transmitting link BP range information and receiving link BP range information by the node is not limited.

When the method for transmitting bit indexed explicit replication information provided according to the embodiments of the present invention is used, the link BP range information of nodes can be transmitted in the network so that the link BP range information of one or more nodes is transmitted between network nodes; and the SDN controller can obtain the link BP range information of the one or more nodes, avoiding the reconfiguration of link BPs by the SDN controller due to link changes of nodes in any case, decreasing the management complexity of the SDN controller and improving the management flexibility of the SDN controller. Moreover, when the link BP range information of nodes overlaps, the overlapped portion is adjusted so that the link BP range information of nodes does not overlap, so as to forward a BIER TE message in time. A node adjusts its own link BP range information so that the link BP range information of the node does not need to be repeatedly allocated and revoked by the SDN controller according to link changes, thereby improving the efficiency and flexibility of transmitting link BPs.

The method for transmitting BIER information provided according to the embodiments of the present invention is exemplarily illustrated in conjunction with a network shown in FIG. 2.

For convenience of description, in FIG. 2, the numeral following a node is the same as the node BP information allocated to the node, and the numeral following a link represents the link BP information allocated to the link. Nodes 1 to 9 are edge nodes in the network. For a certain multicast service, or a certain multicast stream, the node 1 is an ingress node, and the nodes 2 to 9 are egress nodes. It can be known from the traffic planning that the traffic needs to go through links 1 to 15 to reach all the egress nodes and be sent to receivers. In the case of a stable network and service, it is feasible to totally control the generation of link BPs by the SDN controller.

However, the network and service generally change dynamically. When the receiver connected to the node 2 does not need the multicast service or the multicast stream, the link BP13 from the node 102 to the node 2 no longer needs to be encapsulated in the BIER TE message header of the multicast stream. After a period of time, the receiver connected to the node 2 may need the multicast service again. At this time, the link BP will be encapsulated in the BIER TE message for transmission. In addition, as the link load of the network changes, some previous links may be no longer able to bear the multicast service or the multicast stream and so the multicast service or the multicast stream needs to be transferred onto other links. These new links also need link BP information to direct their traffic transmission. If it is the SDN controller that manages link BPs, all the above cases will require the SDN controller to allocate link IDs for new links and allocate and revoke link IDs continuously based on changes, resulting in complex and inflexible management and an inability to adapt to rapid changes of network services.

In the embodiments of the present invention, as shown in FIG. 2, configurable link BPs capable of forwarding BIER network data traffic of a node 102 include links 11, 12 and 13, so the range of the link quantity is 3, the value of the corresponding link BPs may be 1-3, and the link BP range information of node 102 is 1-3. Node 102 transmits its own link BP range information in the network. When the node 2 does not receive the multicast service, the link 13 between the node 2 and the node 102 does not receive multicast traffic. In this case, the original link BP range information will not be adjusted, and other nodes and the SDN controller will not be notified of the link change of the node 102. In the subsequent process, if the link 13 needs to transmit BIER TE traffic again, the original BP information may be directly used without BP re-allocation, thereby avoiding frequent notification of the link BP range information by a device and the complex control of the SDN controller to repeatedly allocate and revoke link IDs. For example, when the link 13 does not need to forward BIER TE traffic, the controller revokes the link BPs allocated to link 13. Later, when the link 13 needs to forward BIER TE traffic again, it is highly possible that the previously revoked link BPs have been allocated to another link, and the controller may have to re-allocate link BPs and notify one or more nodes. If the controller wants to reuse the BPs previously allocated to the link 13, the controller needs to specially save the revoked BPs to ensure that the BPs will not be re-allocated by mistake, causing complex management and an unstable network.

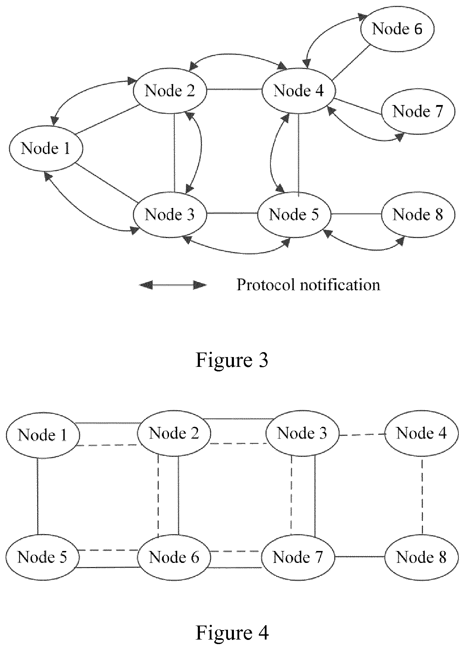

The method for transmitting BIER information provided according to the embodiments of the present invention is illustrated in conjunction with a network shown in FIG. 3. FIG. 3 shows a network in which the BIER TE technology is operated.

In the network illustrated in FIG. 3, each node may estimate the number of its own interfaces and determine link BP range information according to the number of interfaces. Links of each node include a virtual link and a physical link, and the corresponding interfaces includes a virtual interface and a physical interface. For example, the node 1 estimates that its own link quantity ranges within 10 and the link BP range information may be 1-10 or 201-210; the node 2 estimates that its own link quantity ranges within 10 and the link BP range information may be 11-20. The link BP range information of each node is estimated in the same manner.

Each node in the network may transmit its own link BP range through an OSPF protocol extension, an ISIS protocol extension, an BGP protocol extension or a Babel protocol extension. For example, as shown by solid lines in FIG. 3, the node 1 notifies the node 2 and the node 3 of the link BP range information of the node 1, the node 2 notifies the node 1, the node 3 and the node 4 of the link BP range information of the node 2, the node 3 notifies the node 1, the node 2 and the node 5 of the link BP range information of the node 3. In the same manner, each node notifies neighboring nodes of its own link BP range information. Meanwhile, when each node notifies neighboring nodes of its own link BP range information, each node may also notify the neighboring nodes of the link BP range information of another node received by itself. For example, the node 2 notifies the node 3 of the link BP range information of the node 2, and also notifies the node 3 of the link BP range information of the node 1 received by the node 2 from the node 1. In this way, each node in the network may obtain the link BP range information of other nodes.

When estimating its link BP range information, each node may use discontinuous BP spaces to identify the link BP range information and thus the link BP range notified by a node may be discontinuous. For example, the link BP range information of the node 1 is 1-4. With the dynamic change of the network, the link quantity of the node 1 is added by 4, and the link BP range information thereof is extended, for example, may be extended with 101-104. At this time, the link BP range information of the node 1 is 0-4 and 101-104. Here, when being transmitted through an extended protocol, the link BP range information may be transmitted in two continuous ranges, which is not specifically limited herein.

The node may transmit at least one of a node priority, node BP information, and bit forwarding route prefix information of the node along with the link BP range information.

The method for transmitting BIER information provided according to the embodiments of the present disclosure is illustrated in conjunction with FIG. 4. FIG. 4 shows a network is which the BIER TE technology is operating. In the network illustrated in FIG. 4, due to service development needs and other control needs, two sets of links in the network are used for operating the BIER TE technology and the two sets of links are required not to interfere with each other. The link BP range information is broadcasted in conjunction with a multi-topology technology or a multi-subdomain technology in the BIER TE technology.

As shown in FIG. 4, nodes corresponding to dashed lines constitute a subdomain, such as the subdomain A; nodes corresponding to solid lines constitute another subdomain, such as the subdomain B. the Node 1, the node 2, the node 3, the node 5, the node 6, the node 7 and the node 8 belong to both subdomain A and subdomain B; the node 4 only belongs to the subdomain A.

When the node 1 belongs to both subdomain 1 and subdomain 2 and has different BP ranges in the two subdomains, the node 1 may broadcast that the link BP range information is 1 to 10 in subdomain 1 and the link BP range information is 8-12 in subdomain 2. When the node 4 only belongs to the subdomain 1, the node 4 may only broadcast the link BP range information in subdomain 1 and the link BP range information is 41-45.

In two subdomains (or two topologies), the link BP ranges may be identical or different, and the link BP ranges may overlap, which is determined according to an actual situation of the network.

In the same subdomain or topology, a set identifier may also be used for distinguishing between different levels of links and a link BP range may be notified along with the set identifier.

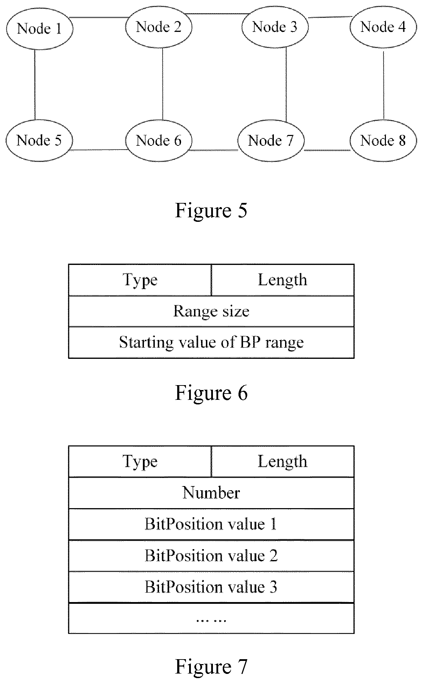

The method for transmitting BIER information provided according to the embodiments of the present disclosure is illustrated in conjunction with a network shown in FIG. 5. FIG. 5 shows a network in which the BIER TE technology is operating.

After the network illustrated in FIG. 5 performs the interaction of the link BP range information of nodes, the link BP range information of the node 1 is 1-10 and the link BP range information of the node 8 received by the node 1 is 5-10. Similarly, the link BP range information of the node 8 is 5-10 and the link BP range information of the node 1 received by the node 8 is 1-10. The link BP range information of the node 1 overlaps the link BP range information of the node 8, causing that the BIER TE message cannot be forwarded normally.

At this time, the target node to be adjusted is determined according to one of the following node information. If the link BP range information of the nodes is transmitted along with the node priorities, the node priorities may be compared and the node with a lower node priority is taken as the target node. Here, it is assumed that the target node is the node 1, the node 1 will adjust its own link BP range information to be another value that does not overlap the link BP range information of the node 8. For example, the node 1 adjusts the link BP range information to be 1-4 and 105-110. Moreover, the node 1 will notify other nodes including the node 8 of the adjusted link BP range information. Of course, a node with a higher priority may be taken as the target node to adjust the link BP range information thereof. A unified adjustment rule may be set according to actual needs.

If the link BP range information is notified along with the node BP information of the node rather than the node priority, the sizes of the BP information of the nodes may be compared. A unified adjustment rule may be set in the network that a node with a larger BP information size is taken as the target node whose link BP range information is to be adjusted. Of course, an adjustment rule may be set that a node with a smaller BP information size is taken as the target node whose link BP range information is to be adjusted.

If both the node priority and the node BP information are notified along with the link BP range information, the node priorities may be compared firstly. When two nodes have the same priority, the node BP information of the two nodes are compared to determine which one is taken as the target node to adjust the link BP range information thereof.

If the link BP range information is not notified along with the node priority and the node BP information, the bit forwarding route prefixes of two nodes are compared to determine which one is the target node, and a unified adjustment rule is set in the network that a node with a larger (or smaller) bit forwarding route prefix is taken as the target node to adjust the link BP range information.

An extension manner of a protocol for transmitting the link BP range information in the method for transmitting BIER information provided according to the embodiments of the present disclosure is exemplarily illustrated below.

As shown in FIG. 6, illustrated is an example in which a TLV (type, length and value) format is used for the notification of the link BP range information. A specific notification manner in each protocol may be adjusted according to protocol characteristics, which is not limited in the embodiments of the present disclosure. The range size is used for indicating the link BP range, and the Bit Position value is the start value of the link BP range. As shown in FIG. 7, a notification manner may be a manner of simply listing BP values for identification. For example, when the link BP range information is 1-4, the range size shown in FIG. 6 is 4 and the BitPosition value is 1. In FIG. 7, the number is used for indicating the number of the listed BP values and the specific BP values are listed as BitPosition value 1, BitPosition value 2, etc. For example, when the link BP range information is 1-4, the number is 4, the BitPosition value 1 is 1, the BitPosition value 2 is 2, the BitPosition value 3 is 3 and the BitPosition value 4 is 4.

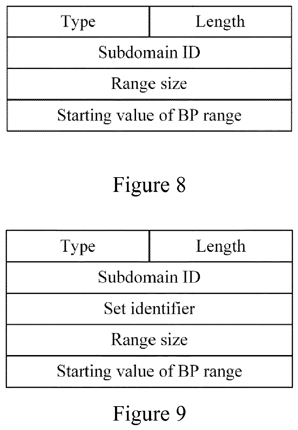

FIG. 8 shows an example in which the notification of the link BP range information is performed along with a subdomain ID. FIG. 9 shows an example in which the notification of the link BP range information is performed along with a set identifier (SI). The subdomain ID may be a topology ID. In addition, the node priority and the node BP information may also be notified together with the link BP range information in a similar manner, or together with the link BP information in a sub-TLV manner.

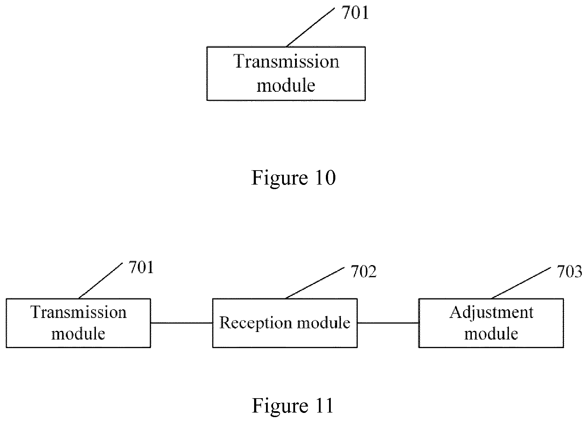

In order to implement the method for transmitting bit indexed explicit replication information according to the above embodiments, the embodiments of the present disclosure further provide a device for transmitting bit indexed explicit replication information. The device is applicable to a node in a BIER TE network. As shown in FIG. 10, the device includes: a transmission module 701, which is configured to transmit link BP range information of a node, where the link BP range information is a value range of configurable link BPs capable of forwarding network data traffic.

Here, the link includes at least one of a physical link and a virtual link.

The transmission module 701 is further configured to transmit at least one of the following node information: a node priority, node BP information, a subdomain identifier (ID), a set identifier (SI), and a topology ID.

In the embodiments of the present invention, the transmission module 701 transmits the link BP range information through an extended protocol. The extended protocol includes at least one of the following protocols: an OSPF protocol, an ISIS protocol, a BGP protocol and a Bebel protocol.

As shown in FIG. 11, the device further includes: a reception module 702, which is configured to receive link BP range information of another node.

As shown in FIG. 11, the device further includes: an adjustment module 703, which is configured to adjust the link BP range information of the node according to a preset adjustment rule, when the link BP range information of the node overlaps the link BP range information of another node.

The step in which the adjustment module 703 adjusts the link BP range information of the node according to the preset adjustment rule includes: determining a target node to be adjusted according to at least one of a node priority, a node BP information size and a bit forwarding route prefix of the node, and adjusting the link BP range information of the node when the target node is the node itself.

When a logical unit is added in a network node, the transmission module 701, the reception module 702 and the adjustment module 703 may be implemented by a Central Processing Unit (CPU), a Digital Signal Processor (DSP) or a Field Programmable Gate Array (FPGA) in the network node.

The embodiments of the present invention further provide a computer-readable storage medium storing computer-executable instructions that, when executed by a processor, implement the method according to the above embodiments.

It will be understood by those skilled in the art that functional modules/units in all or part of the steps of the method, the system, and the device disclosed above may be implemented as software, firmware, hardware, and appropriate combinations thereof. In the hardware implementation, the division of functional modules/units mentioned in the above description may not correspond to the division of physical units. For example, one physical component may have several functions, or one function or step may be executed jointly by several physical components. Some or all components may be implemented as software executed by processors such as digital signal processors or microprocessors, hardware, or integrated circuits such as application specific integrated circuits. Such software may be distributed on computer-readable media, which may include computer storage media (non-transitory media) and communication media (transitory media). As is known to those skilled in the art, the term, computer storage media, includes volatile and nonvolatile, removable and non-removable media implemented in any method or technology for storing information (such as computer-readable instructions, data structures, program modules or other data). The computer storage media include, but are not limited to, RAM, ROM, EEPROM, flash memory or other memory technologies, CD-ROM, digital versatile disc (DVD), or other optical disc storage, magnetic cassette, magnetic tape, magnetic disk storage or other magnetic storage devices, or any other media used for storing desired information and accessible by the computer. In addition, as is known to those skilled in the art, communication media generally include computer-readable instructions, data structures, program modules, or other data in modulated data signals such as carriers or other transmission mechanisms, and may include any information delivery media.

The present invention is described with reference to flowcharts and/or block diagrams of methods, apparatuses (systems) and computer program products according to the embodiments of the present invention. It should be understood that each flow and/or block in the flowcharts and/or block diagrams and a combination of flows and/or blocks in the flowcharts and/or block diagrams are implemented by computer program instructions. These computer program instructions can be provided to a general-purpose computer, a special-purpose computer, an embedded processor or a processor of another programmable data processing apparatus to produce a machine so that instructions executed by a computer or a processor of another programmable data processing apparatus produce a means for implementing the functions specified in one or more flows in the flowcharts and/or one or more blocks in the block diagrams.

These computer program instructions can also be stored in a computer-readable memory which can direct a computer or another programmable data processing apparatus to operate in a particular manner so that the instructions stored in the computer-readable memory produce a manufactured product including an instruction device. The instruction device implements the functions specified in one or more flows in the flowcharts and/or one or more blocks in the block diagrams.

These computer program instructions can also be loaded onto a computer or another programmable data processing apparatus so that a series of operation steps are performed on the computer or another programmable apparatus to produce processing implemented by a computer. Therefore, instructions executed on a computer or another programmable apparatus provide steps for implementing the functions specified in one or more flows in the flowcharts and/or one or more blocks in the block diagrams.

The above are only preferred embodiments of the present invention and are not intended to limit the scope of the present invention.

### INDUSTRIAL APPLICABILITY

The embodiments of the present invention implement the transmission of the link BP range information of a node in a BIER TE network in the network so that an SDN controller no longer needs to frequently change and send link BPs when the state of the link on which the network node is forwarding the network data traffic changes, thereby improving the efficiency and flexibility of transmitting link BPs, avoiding the complex and inflexible management of the SDN controller, and achieving the link BP management with high efficiency and flexibility in the network.

## Claims

1. A method for transmitting bit indexed explicit replication information, comprising:
transmitting (S101), by a bit indexed explicit replication traffic engineering, BIER TE, node in a BIER TE network, a range information of configurable link bit positions, BPs, of the BIER TE node,
capable of forwarding network data traffic between the BIER TE node and neighboring nodes of the BIER TE node to another node in the BIER TE network,
wherein the another node refers to any one BIER TE node other than the BIER TE node in the BIER TE network, and wherein the range information of the configurable link BPs is a bit position value range of the configurable link BPs;
receiving (SI02), by the BIER TE node, range information of configurable link BPs of the another node;
adjusting, by the BIER TE node, the range information of the configurable link BPs of the BIER TE node according to a preset adjustment rule, in a case where the range information of the configurable link BPs of the BIER TE node overlaps with the range information of the configurable link BPs of the another node.

2. The method according to claim 1, wherein a link indicated by the configurable link BPs comprises at least one of a physical link and a virtual link.

3. The method according to claim 1, further comprising: transmitting, by the BIER TE node, at least one of the following node information: a node priority, node BP information, a subdomain identifier, ID, a set identifier, SI, and a topology ID, while the BIER TE node transmits the range information of the configurable link BPs of the BIER TE node.

4. The method according to claim 1, further comprising: directly configuring the range information of the configurable link BPs on the BIER TE node, or receiving the range information of the configurable link BPs sent by a controller, before the range information of the configurable link BPs of the BIER TE node is transmitted.

5. The method according to claim 1 or claim 3, wherein the transmitting, by the BIER TE node in the BIER TE network, the range information of the configurable link, BPs, capable of forwarding network data traffic between the BIER TE node and the neighboring nodes of the BIER TE node to the another node in the BIER TE network, comprises:
transmitting, by the BIER TE node, the range information of the configurable link BPs of the BIER TE node through an extended protocol, wherein the protocol comprises at least one of the following protocols: an Open Shortest Path First, OSPF, protocol, an Intermediate System to Intermediate System, ISIS, protocol, a Border Gateway Protocol, BGP, and a Babel protocol.

6. The method according to claim 1, wherein the adjusting, by the BIER TE node, the range information of the configurable link BPs of the BIER TE node according to the preset adjustment rule, in a case where the range information of configurable link BPs of the BIER TE node overlaps with the range information of the configurable link BPs of the another node, comprises:
determining a target node to be adjusted according to at least one of a node priority, a node BP information size and a bit forwarding route prefix of both the BIER TE node and the another node, in a case where the range information of configurable link BPs of the BIER TE node overlaps with the range information of the configurable link BPs of the another node, wherein the target node is one of the BIER TE node and the another node; and
adjusting, by the BIER TE node, the range information of the configurable link BPs of the BIER TE node according to the preset adjustment rule when the target node is the BIER TE node.

7. A device for transmitting bit indexed explicit replication information, applicable to a bit indexed explicit replication information traffic engineering, BIER TE, node in a BIER TE network comprising;
a transmission module (701), configured to transmit a range information of configurable link bit positions, BPs, of the BIER TE node, capable of forwarding network data traffic between the BIER TE node and neighboring nodes of the BIER TE node to another node, wherein the another node refers to any one BIER TE node other than the BIER TE node in the BIER TE network , wherein the range information of the configurable link BPs is a bit position value range of the configurable link BPs;
a reception module (702), configured to receive range information of configurable link BPs of the another node;
an adjustment module (703), configured to adjust the range information of the configurable link BPs of the BIER TE node according to a preset adjustment rule, in a case where the range information of the configurable link BPs of the BIER TE node overlaps with the range information of the configurable link BPs of the another node.

8. The device according to claim 7, wherein the transmission module (701) is further configured to transmit at least one of the following node information: a node priority, node BP information, a subdomain identifier, ID, a set identifier, SI, and a topology ID.

9. The device according to claim 7, wherein the adjustment module (703) is configured to adjust the range information of the link BPs of the node according to the preset adjustment rule in the following manner wherein the device is further configured to determine
a target node to be adjusted according to at least one of a node priority, a node BP information size and a bit forwarding route prefix of both the BIER TE node and the another node, in a case where the range information of the configurable link BPs of the BIER TE node overlaps with the range information of the configurable link BPs of the another node, wherein the target node is one of the BIER TE node and the another node; and
adjust the range information of the configurable link BPs of the BIER TE node according to the preset adjustment rule when the target node is the BIER TE node.

10. A computer-readable storage medium storing computer-executable instructions that, when executed by a processor, implements the method according to any one of claims 1 to 6.

## Patentansprüche

1. Verfahren zum Übertragen von bitindexierten expliziten Replikationsinformationen, das Folgendes umfasst:
Übertragen (S101) einer Bereichsinformation von auslegbaren Linkbitpositionen, BPs, eines bitindexierten expliziten Replikationsverkehrstechnik(BIER TE)-Knotens in einem BIER-TE-Netzwerk durch den BIER-TE-Knoten, die in der Lage sind, Netzwerkdatenverkehr zwischen dem BIER-TE-Knoten und benachbarten Knoten des BIER-TE-Knotens zu einem anderen Knoten im BIER-TE-Netzwerk weiterzuleiten,
wobei sich der andere Knoten auf einen beliebigen BIER-TE-Knoten außer auf den BIER-TE-Knoten im BIER-TE-Netzwerk bezieht und wobei die Bereichsinformation der auslegbaren Link-BPs ein Bitpositionswertebereich der auslegbaren Link-BPs ist;
Empfangen (S102), einer Bereichsinformation von auslegbaren Link-BPs des anderen Knotens durch den BIER-TE-Knoten;
in einem Fall, in dem sich die Bereichsinformation der auslegbaren Link-BPs des BIER-TE-Knotens mit der Bereichsinformation der auslegbaren Link-BPs des anderen Knotens überlappt, Anpassen der Bereichsinformation der auslegbaren Link-BPs des BIER-TE-Knotens durch den BIER-TE-Knoten gemäß einer voreingestellten Anpassungsregel.

2. Verfahren nach Anspruch 1, wobei ein Link, der von den auslegbaren Link-BPs angezeigt wird, mindestens eines von einem physischen Link und einem virtuellen Link umfasst.

3. Verfahren nach Anspruch 1, das ferner Folgendes umfasst: Übertragen von mindestens einer der folgenden Knoteninformationen durch den BIER-TE-Knoten: eine Knotenpriorität, Knoten-BP-Informationen, eine Unterdomänenkennung, ID, eine Satzkennung, SI, und eine Topologie-ID, während der BIER-TE-Knoten die Bereichsinformation der auslegbaren Link-BPs des BIER-TE-Knotens überträgt.

4. Verfahren nach Anspruch 1, das ferner Folgendes umfasst: direktes Auslegen der Bereichsinformation der auslegbaren Link-BPs am BIER-TE-Knoten oder Empfangen der Bereichsinformation der auslegbaren Link-BPs, die von einer Steuerung gesendet wird, bevor die Bereichsinformation der auslegbaren Link-BPs des BIER-TE-Knotens übertragen wird.

5. Verfahren nach Anspruch 1 oder Anspruch 3, wobei das Übertragen der Bereichsinformation der auslegbaren Link-BPs, die in der Lage sind, Netzwerkdatenverkehr zwischen dem BIER-TE-Knoten und den benachbarten Knoten des BIER-TE-Knotens zum anderen Knoten im BIER-TE-Netzwerk weiterzuleiten, durch den BIER-TE-Knoten im BIER-TE-Netzwerk Folgendes umfasst:
Übertragen der Bereichsinformation der auslegbaren Link-BPs des BIER-TE-Knotens durch den BIER-TE-Knoten über ein erweitertes Protokoll, wobei das Protokoll mindestens eines der folgenden Protokolle umfasst: ein Kürzesten-Pfad-Zuerst-Öffnen(OSPF)-Protokoll, ein Zwischensystem-zu-Zwischensystem(ISIS)-Protokoll, ein Grenzgatewayprotokoll, BGP, und ein Babelprotokoll.

6. Verfahren nach Anspruch 1, wobei in einem Fall, in dem sich die Bereichsinformation von auslegbaren Link-BPs des BIER-TE-Knotens mit der Bereichsinformation der auslegbaren Link-BPs des anderen Knotens überlappt, das Anpassen der Bereichsinformation der auslegbaren Link-BPs des BIER-TE-Knotens durch den BIER-TE-Knoten gemäß der voreingestellten Anpassungsregel Folgendes umfasst:
in einem Fall, in dem sich die Bereichsinformation von auslegbaren Link-BPs des BIER-TE-Knotens mit der Bereichsinformation der auslegbaren Link-BPs des anderen Knotens überlappt, Bestimmen eines Zielknotens, der gemäß mindestens einem von einer Knotenpriorität, einer Knoten-BP-Informationsgröße und eines Bitweiterleitungsroutenpräfix sowohl des BIER-TE-Knotens als auch des anderen Knotens anzupassen ist, wobei der Zielknoten einer des BIER-TE-Knotens und des anderen Knotens ist; und
Anpassen der Bereichsinformation der auslegbaren Link-BPs des BIER-TE-Knotens durch den BIER-TE-Knoten gemäß der voreingestellten Anpassungsregel, wenn der Zielknoten der BIER-TE-Knoten ist.

7. Vorrichtung zum Übertragen von bitindexierten expliziten Replikationsinformationen, die für einen bitindexierten expliziten Replikationsinformationsverkehrstechnik(BIER TE)-Knoten in einem BIER-TE-Netzwerk, die Folgendes umfasst;
ein Übertragungsmodul (701), das dazu ausgelegt ist, um eine Bereichsinformation von auslegbaren Linkbitpositionen, BPs, des BIER-TE-Knotens zu übertragen, die in der Lage sind, Netzwerkdatenverkehr zwischen dem BIER-TE-Knoten und benachbarten Knoten des BIER-TE-Knotens zu einem anderen Knoten weiterzuleiten, wobei sich der andere Knoten auf einen beliebigen BIER-TE-Knoten außer auf den BIER-TE-Knoten im BIER-TE-Netzwerk bezieht, wobei die Bereichsinformation der auslegbaren Link-BPs ein Bitpositionswertebereich der auslegbaren Link-BPs ist;
ein Empfangsmodul (702), das dazu ausgelegt ist, eine Bereichsinformation von auslegbaren Link-BPs des anderen Knotens zu empfangen;
ein Anpassungsmodul (703), das dazu ausgelegt ist, in einem Fall, in dem sich die Bereichsinformation der auslegbaren Link-BPs des BIER-TE-Knotens mit der Bereichsinformation der auslegbaren Link-BPs des anderen Knotens überlappt, die Bereichsinformation der auslegbaren Link-BPs des BIER-TE-Knotens gemäß einer voreingestellten Anpassungsregel anzupassen.

8. Vorrichtung nach Anspruch 7, wobei das Übertragungsmodul (701) ferner dazu ausgelegt ist, mindestens eine der folgenden Knoteninformationen zu übertragen: eine Knotenpriorität, Knoten-BP-Informationen, eine Unterdomänenkennung, ID, eine Satzkennung, SI, und eine Topologie-ID.

9. Vorrichtung nach Anspruch 7, wobei das Anpassungsmodul (703) dazu ausgelegt ist, die Bereichsinformation der Link-BPs des Knotens gemäß der voreingestellten Anpassungsregel in der folgenden Weise anzupassen, wobei die Vorrichtung ferner zu Folgendem ausgelegt ist
in einem Fall, in dem sich die Bereichsinformation von auslegbaren Link-BPs des BIER-TE-Knotens mit der Bereichsinformation der auslegbaren Link-BPs des anderen Knotens überlappt, Bestimmen eines Zielknotens, der gemäß mindestens einem von einer Knotenpriorität, einer Knoten-BP-Informationsgröße und eines Bitweiterleitungsroutenpräfix sowohl des BIER-TE-Knotens als auch des anderen Knotens anzupassen ist, wobei der Zielknoten einer des BIER-TE-Knotens und des anderen Knotens ist; und
Anpassen der Bereichsinformation der auslegbaren Link-BPs des BIER-TE-Knotens gemäß der voreingestellten Anpassungsregel, wenn der Zielknoten der BIER-TE-Knoten ist.

10. Computerlesbares Speichermedium, auf dem computerausführbare Anweisungen gespeichert sind, die, wenn sie von einem Prozessor ausgeführt werden, das Verfahren nach einem der Ansprüche 1 bis 6 implementieren.

## Revendications

1. Procédé de transmission d'informations de réplication explicite indexée par bits comprenant :
la transmission (S101), par un nœud d'ingénierie du trafic de réplication explicite indexée par bits, BIER TE, dans un réseau BIER TE, d'informations de plage de positions de bits, BP, de liaison configurables du nœud BIER TE, en mesure de transférer un trafic de données de réseau entre le nœud BIER TE et des nœuds voisins, du nœud BIER TE à un autre nœud dans le réseau BIER TE,
dans lequel l'autre nœud fait référence à tout nœud BIER TE autre que le nœud BIER TE dans le réseau BIER TE, et dans lequel les informations de plage des PB de liaison configurables est une plage de valeur de position de bits des PB de liaison configurables ;
la réception (S102), par le nœud BIER TE, d'informations de plage des PB de liaison configurables de l'autre nœud ;
le réglage, par le nœud BIER TE, des informations de plage des PB de liaison configurables du nœud BIER TE selon une règle de réglage prédéfinie, dans le cas où les informations de plage des PB de liaison configurables du nœud BIER TE se chevauchent avec les informations de plage des PB de liaison configurables de l'autre nœud.

2. Procédé selon la revendication 1, dans lequel une liaison indiquée par les PB de liaison configurables comprend au moins une parmi une liaison physique et une liaison virtuelle.

3. Procédé selon la revendication 1, comprenant en outre : la transmission, par le nœud BIER TE, d'au moins une des informations de nœud suivantes : une priorité de nœud, des informations de BP de nœud, un identifiant, ID, de sous-domaine, un identifiant d'ensemble, SI, et un ID de topologie, tandis que le nœud BIER TE transmet les informations de plage des PB de liaison configurables du nœud BIER TE.

4. Procédé selon la revendication 1, comprenant en outre : la configuration directe des informations de plage des PB de liaison configurables sur le nœud BIER TE, ou la réception des informations de plage des PB de liaison configurables envoyées par une unité de commande, avant que les informations de plage des PB de liaison configurables du nœud BIER TE ne soient transmises.

5. Procédé selon la revendication 1 ou la revendication 3, dans lequel la transmission, par le nœud BIER TE dans le réseau BIER TE, des informations de plage des PB de liaison configurables, en mesure de transférer un trafic de données de réseau entre le nœud BIER TE et les nœuds voisins du nœud BIER TE à l'autre nœud dans le réseau BIER TE, comprend :
la transmission, par le nœud BIER TE, des informations de plage des PB de liaison configurables du nœud BIER TE par un protocole étendu, dans lequel le protocole comprend au moins un des protocoles suivants : un protocole OSPF (Open Shortest Path First), un protocole ISIS (Intermediate System to Intermediate System), un protocole BGP (Border Gateway Protocol) et un protocole Babel.

6. Procédé selon la revendication 1, dans lequel le réglage, par le nœud BIER TE, des informations de plage des PB de liaison configurables du nœud BIER TE selon la règle de réglage prédéfinie, dans le cas où les informations de plage des PB de liaison configurables du nœud BIER TE se chevauchent avec les informations de plage des PB de liaison configurables de l'autre nœud, comprend :
la détermination d'un nœud cible devant être réglé selon au moins un parmi une priorité de nœud, une taille d'informations de BP de nœud et un préfixe de route de transfert de bits de chacun du nœud BIER TE et de l'autre nœud, dans le cas où les informations de plage des PB de liaison configurables du nœud BIER TE se chevauchent avec les informations de plage des PB de liaison configurables de l'autre nœud, dans lequel le nœud cible est l'un parmi le nœud BIER TE et l'autre nœud ; et
le réglage, par le nœud BIER TE, des informations de plage des PB de liaison configurables du nœud BIER TE selon la règle de réglage prédéfinie lorsque le nœud cible est le nœud BIER TE.

7. Dispositif de transmission d'informations de réplication explicite indexée par bits, applicable à un nœud d'ingénierie du trafic d'informations de réplication explicite indexée par bits, BIER TE, dans un réseau BIER TE comprenant :
un module de transmission (701), configuré pour transmettre des informations de plage de positions de bits, BP, de liaison configurables du nœud BIER TE, en mesure de transférer un trafic de données de réseau entre le nœud BIER TE et des nœuds voisins du nœud BIER TE à un autre nœud, dans lequel l'autre nœud fait référence à tout nœud BIER TE autre que le nœud BIER TE dans le réseau BIER TE, dans lequel les informations de plage des PB de liaison configurables est une plage de valeur de position de bits des PB de liaison configurables ;
un module de réception (702), configuré pour recevoir des informations de plage des PB de liaison configurables de l'autre nœud ;
un module de réglage (703), configuré pour régler les informations de plage des PB de liaison configurables du nœud BIER TE selon une règle de réglage prédéfinie, dans le cas où les informations de plage des PB de liaison configurables du nœud BIER TE se chevauchent avec les informations de plage des PB de liaison configurables de l'autre noeud.

8. Dispositif selon la revendication 7, dans lequel le module de transmission (701) est en outre configuré pour transmettre au moins une des informations de nœud suivantes : une priorité de nœud, des informations de BP de nœud, un identifiant, ID, de sous-domaine, un identifiant d'ensemble, SI, et un ID de topologie.

9. Dispositif selon la revendication 7, dans lequel le module de réglage (703) est configuré pour régler les informations de plage des PB de liaison du nœud selon la règle de réglage prédéfinie de la manière suivante, dans lequel le dispositif est en outre configuré pour
déterminer un nœud cible devant être réglé selon au moins un parmi une priorité de nœud, une taille des informations de BP de nœud et un préfixe de route de transfert de bits de chacun du nœud BIER TE et de l'autre nœud, dans le cas où les informations de plage des PB de liaison configurables du nœud BIER TE se chevauchent avec les informations de plage des PB de liaison configurables de l'autre nœud, dans lequel le nœud cible est l'un parmi le nœud BIER TE et l'autre nœud ; et
le réglage des informations de plage des PB de liaison configurables du nœud BIER TE selon la règle de réglage prédéfinie lorsque le nœud cible est le nœud BIER TE.

10. Support de stockage lisible par ordinateur stockant des instructions exécutables par ordinateur qui, lorsqu'elles sont exécutées par un processeur, mettent en œuvre le procédé selon l'une quelconque des revendications 1 à 6.
